# EUROPEAN PATENT APPLICATION

(11) **EP 4 260 938 A1**
(43) Date of publication of application: **18.10.2023**
(21) Application number: 21903680.3
(22) Date of filing: 22.11.2021
(51) Int. Cl.: B01J 37/02, B01J 37/08, B01J 23/46, B01J 23/42, B01J 37/00, B01D 53/94, F01N 3/20

(54) **METHOD FOR PREPARING NOX STORAGE-REDUCTION CATALYST ARTICLE COMPRISING RUTHENIUM COMPOSITE, AND EXHAUST TREATMENT SYSTEM COMPRISING SAME**

(30) Priority: 09.12.2020 KR 20200171008
(71) Applicant: Heesung Catalysts Corporation, Siheung-si, Gyeonggi-do 15088 (KR)
(72) Inventor: KOMATEEDI, Narayana Rao, Ansan-si Gyeonggi-do 15219 (KR); KIM, Eun-seok, Ansan-si Gyeonggi-do 15500 (KR); LIM, Seung-soo, Siheung-si Gyeonggi-do 15019 (KR)
(74) Representative: Regimbeau
(86) International application number: PCT/KR2021/017188
(87) International publication number: WO 2022/124634

(57) **Abstract**

The present disclosure relates to a method for preparing a NOx storage-reduction catalyst article comprising a ruthenium composite as an active ingredient, and an exhaust treatment system comprising same. Proposed is a stable preparation method or an on-site simultaneous preparation method which is simplified as well as capable of preparing an NSR article exhibiting an equal level of activity, the method in which the NSR article is prepared by preliminarily preparing a heat-resistant ruthenium composition, mixing the same with de-NOxing components and applying same on a carrier.

## Description

### Technical Field

The present disclosure relates to a method for manufacturing a NOₓ storage and reduction (NSR) catalyst article including a ruthenium composite as an active ingredient, and to an exhaust treatment system including the same.

### Background Art

Ruthenium (Ru), as a platinum group element, is known to have high activity in various catalytic reactions, especially in the De-NOx reaction, but the ruthenium is volatilized to form RuO₄ in a high-temperature oxidizing atmosphere above 700°C, so it has been a problem to apply as a catalyst due to its high temperature stability. Specifically, Ru metal has a melting point of 2,300°C and a boiling point of 4,100°C, which is extremely stable in the metal state, but the boiling point of RuO₂ is 1,400°C, and especially the boiling point of RuO₄ is below 100°C, so it is necessary to keep Ru in the metal state to utilize the catalytic properties of Ru and have high temperature durability. As a structure to solve this Ru volatility problem, a heat-resistant ruthenium composite composed of a matrix embedded with multiple cores is proposed, in which ruthenium is present in the metallic state in the cores, and Ru composite oxides including Ru PV (perovskite) in the matrix, and the NSRs including them are studied.

### Disclosure

### Technical Problem

The method for manufacturing NSR catalysts by preparing a preliminary heat-resistant ruthenium composite, mixing it with NOₓ-removing (De-NOₓ) components, and applying it to a support or carrier to produce NSR products is considered to be a stable method, but it has the disadvantage of requiring a complex process with multiple steps. Therefore, there is a need for a simplified process to manufacture NSRs with equivalent activity, even when ruthenium losses are taken into account.

### Technical Solution

An objective of the present disclosure is to propose a simple process or a multistep method based on stable complexes for the preparation of Ru slurry, which is essential for the manufacture of NOₓ storage and reduction catalyst (NSR) articles in situ and simultaneously in one step.

The first feature of the present disclosure is a method for manufacturing NSR articles in an in-situ simultaneous manner, the method including: preparing a Ru slurry by dispersing a Ru metal particle powder having an average particle diameter of 5 nm to 50 microns onto a support selected from CeO₂, ZrO₂, Al₂O₃, TiO₂, SiO₂, and adding an accelerator selected from Ba, Sr, La, Ce, Zr, Mg, Rb, Ca, Mn, Fe, Co precursors, and a platinum group element precursor; adjusting the pH of the slurry; milling the slurry so that the average particle diameter is 10um or less; coating the slurry on a carrier; and drying and calcining the carrier coated with the slurry to manufacture a NOₓ storage and reduction catalyst article.

A second feature of the present disclosure provides a method for manufacturing a NOₓ storage and reduction catalyst article including: preparing a Ru slurry by preliminarily synthesizing a heat-resistant ruthenium composite and mixing it with a conventional de-NOₓ washcoat; milling the slurry to an average particle diameter of 10 um or less and coating the slurry on a carrier; and drying and calcining the carrier coated with the slurry. Non-limitingly, the ruthenium composite synthesis step includes mixing Ru metal powder or nanoparticle powder (Ru/RuOₓ) with a precursor of an alkali metal including Ba, La, Sr, Zr, and Ca, and a precursor of a secondary metal including Mg, Fe, Mn, Ni, and Co, and heat treating in air. The heat-resistant ruthenium composite synthesis method can be utilized by using Ru powder itself, by using Ru colloidal solution, or after treating Ru powder with organic materials or reducing agents to lower the heat-resistant ruthenium composite synthesis temperature. In addition, a conventional de-NOx washcoat may be formed by adding an accelerator selected from Ba, Sr, La, Ce, Zr, Mg, Rb, and Ca precursors to a support selected from CeO₂, ZrO₂, Al₂O₃, TiO₂, SiO₂ on which a platinum group component is supported.

In addition, the NSR article may have a two-layer coating structure, and a third feature of the present disclosure provides a NOx storage and reduction catalyst article, the method including: forming a first layer by dry or wet coating a powder of Ru metal particles on a carrier; preparing a second layer slurry by adding an accelerator selected from Ba, Sr, La, Ce, Zr, Mg, Rb, Ca, Mn, Fe, and Co precursors to a support selected from CeO₂, ZrO₂, Al₂O₃, TiO₂, and SiO₂ on which a platinum group component is supported, and coating the second layer slurry on the first layer to form a multi-layer coating structure; and drying and calcining the multi-layer formed carrier.

A fourth feature of the present disclosure proposes an internal combustion engine exhaust system in which an NSR article including a Ru composite is disposed of before a selective catalytic reduction (SCR) catalyst article.

### Advantageous Effects

A method for manufacturing various NSR catalysts is proposed. Preliminarily, a stable method of preparing heat-resistant ruthenium composites, mixing them with NOₓ-removing (De-NOₓ) components, and applying them to a carrier to produce NSR articles is proposed, or an in situ simultaneous method that can manufacture simplified but equally active NSR articles.

### Description of Drawings

FIG. 1 schematically shows a ruthenium composite;
FIG. 2 shows NSR with a two-layer coating structure;
FIG. 3 shows the results of performing WLTC after engine aging for various catalysts;
FIG. 4 shows the de-NOₓ efficiency of NSR according to the average particle size of Ru metal particles as a starting material; and
FIG. 5 is a diagram showing an arrangement between an NSR article and an SCR and the resulting de-NOₓ efficiency.

### Mode for Invention

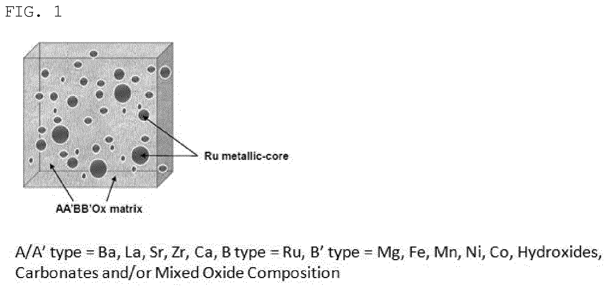

The present disclosure relates to a method for manufacturing a NOₓ storage and reduction (NSR) catalyst article including a ruthenium composite. As used herein, a catalyst article refers to a structure in which a catalytically active component is coated on a so-called flow-through carrier, in which the carrier includes a plurality of cells and in which the inner walls of the cells are coated with a catalytically active ingredient. However, the catalytic article is also referred to as a catalyst and the carrier as a carrier. The coating material including the catalyst active ingredient is referred to as a washcoat or slurry. In the manufacturing method according to the present disclosure, a ruthenium composite is formed. Specifically a ruthenium composite including a matrix embedded with a plurality of cores, in which the cores include ruthenium in its metallic state and the matrix includes Ru composite oxides including Ru PV (perovskite). FIG. 1 schematically shows a ruthenium composite.

In various manufacturing methods of the present disclosure, Ru-nano powder is used to maintain Ru in a metallic state in the core of the ruthenium composite. In the present application, a multi-stage process is applied in which ruthenium composite is preliminarily prepared and then mixed with de-NOₓ components to manufacture NSR articles, and an in-situ co-processing method is applied in which Ru slurry is mixed with Ru metal powder and necessary functional components. The present inventors have found that controlling the particle size of the Ru metal powder in either the multi-step process or the in-situ co-processing method is an important factor in determining the de-NOₓ efficiency.

### Example 1:

NSR was prepared by an in-situ preparation method in which a Ru slurry was prepared by mixing Ru metal powder and De-NOₓ functional components.

Ru metal particle powder with an average particle diameter of 3um was dispersed on Ba-doped CeO₂ and Al₂O₃ supports, Pt amine and Pd nitrate solutions were added, followed by accelerator of La, Zr, and Mg acetic acid to prepare Ru slurry, and pH was adjusted to 8. The Ru slurry was milled to have an average particle diameter of 10 µm or less. Subsequently, the highly dispersed Ru slurry was coated on the carrier, followed by drying and calcining to complete the NSR. Calcining may be performed in an oxidizing or reducing atmosphere. Deionized water is used as the dispersion solvent, but acid may be added when necessary.

### Example 2

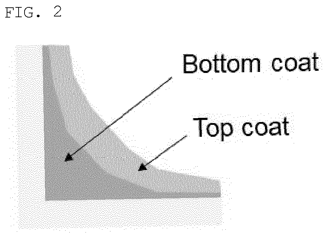

De-NOₓ slurries were prepared by adding La and Mg-based accelerators to CeO₂, Al₂O₃, and ZrO₂ supports containing Pt and Pd components. Ru metal particles having an average particle diameter of 3 um were coated on the carriers, either dry or wet, to form a Ru layer. After coating the prepared De-NOₓ slurry on Ru to form a multilayer, the multi-layer formed carrier was dried and calcined to complete the NSR with the two-layer coating structure schematically shown in FIG. 2.

### Example 3

The NSRs were prepared by a multistage method in which the Ru composite was pre-synthesized and then mixed into a conventional De-NOₓ washcoat to produce a Ru slurry. The Ru composite synthesis method can be utilized by using Ru powder itself, by using Ru colloidal solution, or after treating Ru powder with organic materials or reducing agents to lower the heat-resistant ruthenium composite synthesis temperature.

### Example 3-1: Synthesis of Ru composite by heat treatment

First, Ru metal powder with an average particle diameter of 3 um was mixed with La acetic acid and Mg acetic acid as precursors for alkali metals and Ni nitrate as a precursor for transition metals and heat treated in air to prepare ruthenium composite. De-NOₓ washcoats were prepared by milling CeO₂, Al₂O₃, and ZrO₂ supports containing Pt and Pd components with the addition of La and Mg accelerators. Subsequently, the prepared Ru composite was mixed with the de-NOx washcoat to prepare a Ru slurry, which was then milled until the average particle diameter of the slurry was less than or equal to 10 um, coated on the carrier, dried, and calcined to complete the NSR.

### Example 3-2: Synthesis of Ru composite by organic material treatment

Nanoparticle powders (a mixture of Ru and RuOₓ) with an average particle diameter of 3 um were mixed with La acetic acid, Sr acetic acid, and Ni nitrate, treated with ethylene glycol and heat treated at 800°C for 12 hours to prepare ruthenium composites with good crystallinity. Citric acid and/or sucrose may be applied in place of ethylene glycol. De-NOₓ washcoats were prepared by milling CeO₂, Al₂O₃, and ZrO₂ supports containing Pt and Pd components with the addition of La and Mg accelerators. Subsequently, the prepared Ru composite was mixed with the de-NOx washcoat to prepare a Ru slurry, which was then milled until the average particle diameter of the slurry was less than or equal to 10 um, coated on the carrier, dried, and calcined to complete the NSR.

### Example 3-3: Synthesis of Ru composite by treatment with reducing agent

Nanoparticle powders with an average particle diameter of 3 um were mixed with La acetic, Sr acetic acids, and Ni nitrate, treated with NaBH₄, and heat treated to rapidly prepare ruthenium composites. Even when CaH₂ is applied instead of NaBH₄, Ru composites can be synthesized more rapidly compared with no reducing agent. De-NOₓ washcoats were prepared by milling CeO₂, Al₂O₃, and ZrO₂ supports containing Pt and Pd components with the addition of La and Mg accelerators. Subsequently, the prepared Ru composite was mixed with the de-NOx washcoat to prepare a Ru slurry, which was then milled until the average particle diameter of the slurry was less than or equal to 10 um, coated on the carrier, dried, and calcined to complete the NSR.

### Example 3-4: Synthesis of Ru composite using Ru colloidal solution

A Ru colloidal solution of Ru metal powder dispersed in poly(N-vinyl-2-pyrrolidone) with an average particle diameter of 3 um was mixed with Mg and Ni doped La, and Sr oxides, heat treated and milled to prepare ruthenium composites with an average diameter of 10 um. After supporting Pt and Pd components in CeO₂ and La-doped Al₂O₃, the prepared ruthenium composites were dispersed in deionized water, and accelerators of Ba, Zr, and Mg components were added and milled to prepare the washcoat. The washcoat was milled to an average particle diameter of 10um or less, coated on a carrier, dried, and calcined to complete the NSR.

### Comparative Example

The platinum group (Pt/Pd/Rh) components were impregnated on modified alumina, ceria, and zirconia phases, then thermally fixed (500°C) and milled to prepare powders, which were then mixed with NOx storage components Ba, Sr, and MgO in distilled water to form a slurry, which was then applied to a carrier to complete the NSR comparison catalyst (ref. NSR).

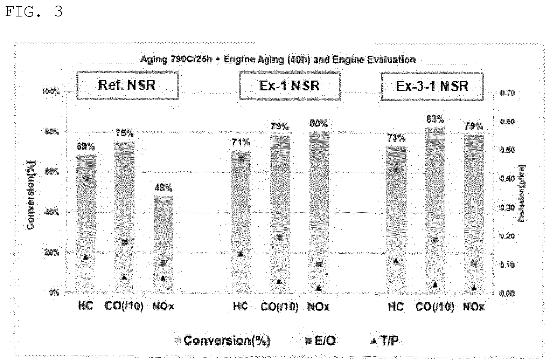

FIG. 3 shows the results of a worldwide harmonized light vehicles test cycle (WLTC) performed on catalysts prepared in the Comparative Example, Example 1 and Example 3 after engine aging. It can be seen that the NSR articles including ruthenium composites prepared by either the in situ co-processing method (Example 1) or the multistage method (Example 3) exhibit a significant improvement in de-NOₓ capability compared to Reference, and thus increased durability at the high temperatures of engine aging.

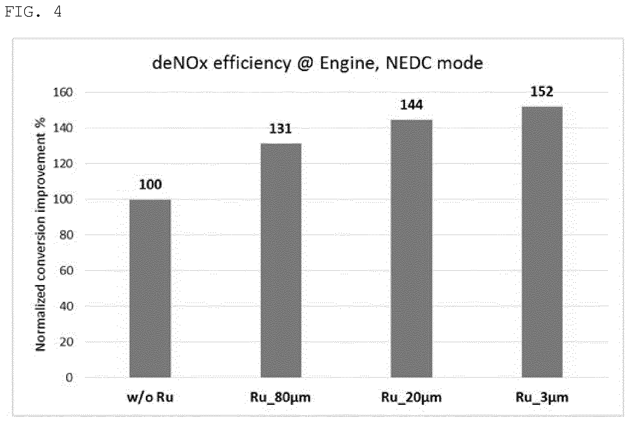

FIG. 4 shows the de-NOₓ efficiency of NSRs prepared by varying the average particle size of the Ru metal particles as starting material in Example 1. In the present application, Ru 3 um means that 90% of the total particles have a size (D90) of 3 um or less, and 50% of the total particles have a size (D50) of 1 um or less. Referring to FIG. 4, it can be seen that the particle size of the starting material affects the De-NOₓ efficiency, and that Ru metal particles of 5 nm to 50 um are particularly preferred.

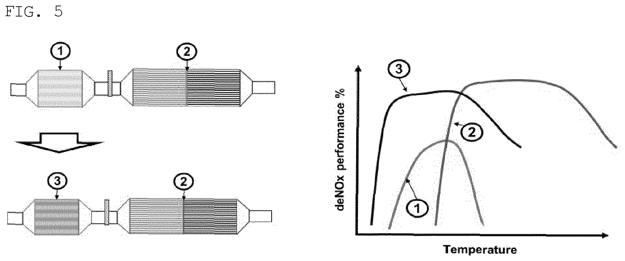

In the embodiments, the completed NSR article may be disposed in front of a selective catalytic reduction (SCR) catalyst article to complete an internal combustion engine exhaust system. FIG. 5 summarizes the de-NOₓ efficiency when the NSR article, according to the present disclosure, is disposed in front of the SCR article, in which the drawing symbols ① denote a conventional NSR article, ② denote an SCR article, and ③ denote an NSR article including the Ru composite according to the present disclosure, and the temperature in the diagram is an engine exhaust gas temperature, and the NOₓ removing efficiency is greatly improved when the NSR including the Ru complex of the present disclosure is attached to the SCR article, especially when the engine exhaust gas temperature is low.

## Claims

1. A method for manufacturing NOₓ storage and reduction catalyst article, the method comprising:
preparing a Ru slurry by dispersing a Ru metal particle powder having an average particle diameter in a range of 5 nm to 50 microns on a support selected from CeO₂, ZrO₂, Al₂O₃, TiO₂, SiO₂, and adding an accelerator selected from Ba, Sr, La, Ce, Zr, Mg, Rb, Ca, Mn, Fe, and Co precursors;
milling the slurry so that the average particle diameter is 10 um or less;
applying the slurry on a carrier; and
drying and calcining the carrier coated with the slurry.

2. The method of claim 1, wherein the precursor is selected from hydroxides, carbonates, nitrates, or oxides of corresponding metals.

3. The method of claim 1, wherein a platinum group component selected from Pt, Pd, and Rh is supported on the support.

4. A method for manufacturing a NOₓ storage and reduction catalyst article, the method comprising:
forming a first layer by dry or wet coating a Ru metal particle powder having an average particle diameter in a range of 5 nm to 50 microns on a carrier;
preparing a second layer slurry by adding an accelerator selected from Ba, Sr, La, Ce, Zr, Mg, Rb, Ca, Mn, Fe, and Co precursors to a support selected from CeO₂, ZrO₂, Al₂O₃, TiO₂, and SiO₂ on which a platinum group component selected from Pt, Pd, and Rh is supported;
forming a multi-layer by applying the second layer slurry on the first layer; and
drying and calcining the multi-layer formed carrier.

5. A method for manufacturing a NOₓ storage and reduction catalyst article, the method comprising:
synthesizing a heat-resistant ruthenium composite;
preparing a Ru slurry by mixing the composite into a de-NOₓ washcoat;
milling the slurry to have an average particle diameter of 10 um or less;
applying the slurry onto a carrier; and
drying and calcining the carrier coated with the slurry.

6. The method of claim 5, wherein synthesizing a heat-resistant ruthenium composite comprises mixing A-type alkali metal precursor composed of Ru metal powder or nano-particle powder (Ru/RuOₓ), Ba, La, Sr, Zr, and Ca, and B-type precursor composed of Mg, Fe, Mn, Ni, and Co, and heat treating in air.

7. The method of claim 6, further comprising an organic material selected from ethylene glycol, citric acid, or sucrose, or a reducing agent selected from NaBH₄ or CaH₂ before heat treating.

8. The method of claim 5, wherein synthesizing the heat-resistant ruthenium composite comprises mixing a Ru colloidal solution in which Ru metal powder is dispersed in poly(N-vinyl-2-pyrrolidone) with La and Sr oxides doped with Mg and Ni, and heat-treating.

9. The method of claim 5, wherein the de-NOₓ washcoat is formed by adding an accelerator selected from Ba, Sr, La, Ce, Zr, Mg, Rb, Ca precursors to a support selected from CeO₂, ZrO₂, Al₂O₃, TiO₂, SiO₂ on which a platinum group component selected from Pt, Pd, Rh is supported.

10. An internal combustion engine exhaust system wherein the NOₓ storage and reduction catalyst article of any one of claims 1 to 8 is disposed in front of a selective catalytic reduction (SCR) catalyst article.
